# EUROPEAN PATENT SPECIFICATION

(11) **EP 2 887 628 B1**
(45) Date of publication and mention of the grant of the patent: **18.07.2018**
(21) Application number: 14198119.1
(22) Date of filing: 16.12.2014
(51) Int. Cl.: H04M 11/02

(54) **Audio and/or video intercommunication system and method for automatic configuration of such system**
Audio- und/oder Videointerkommunikationssystem und Verfahren zur automatischen Konfiguration solch eines Systems
Système d'intercommunication vidéo et/ou audio et procédé de configuration automatique d'un tel système

(30) Priority: 20.12.2013 BE 201300867
(43) Date of publication of application: 24.06.2015
(73) Proprietor: Niko NV, 9100 Sint-Niklaas (BE)
(72) Inventor: Cap, Christophe, 9130 Kieldrecht (BE)
(74) Representative: D'Halleweyn, Nele Veerle Trees Gertrudis

(56) References cited:
- AU-A4- 2009 100 404
- DE-B3-102011 010 466

## Description

### Technical field of the invention

The present invention relates to an audio and/or video intercommunication system with at least one station and at least one device. The invention further relates to a method for the automatic configuration of such audio and/or video intercommunication system. According to the invention, such audio and/or video intercommunication system can, for example, be an access control system, an observation system or a protection system.

### Background of the invention

Existing audio and/or video intercommunication systems, such as for example access control systems, are most of the time not very flexible or require a complex installation. In case of such access control systems, buttons of a door station generally have to be electrically connected to one or more internal units and such connections are, according to the known techniques, not easy to configure. Also, re-configuration of known access control systems is hard to do in case, for example, an extra door station or internal device is added.

AU 2009100404 describes an entry station for an intercom system comprising a touch screen user interface operable to facilitate a dialing function. A communication module is provided which is arranged to communicate with at least one destination terminal in accordance with the dialing function.

DE102011010466 describes a method for setting up a house communication system comprising at least one door station and at least one residence station. The method involves detecting residence stations of the house communication system by a projection tool. A door station symbol is graphically represented with all bell button-symbols and all residence station symbols in a program window of the projection tool. User desired assignments between the determined residence station symbols and the determined bell button-symbols are performed. A projection is transmitted to a station of the house communication system.

### Summary of the invention

It is an object of embodiments of the present invention to provide an audio and/or video intercommunication system that can be configured automatically, as well as a method for the automatic configuration of such a system. More in particular, it is an object of embodiments of the invention to provide an audio and/or video intercommunication system that does not require a complex installation and/or configuration.

In a first aspect, the present invention provides an audio and/or video communication system according to embodiments of the invention comprises, besides at least one station and at least one device, also a configuration module. Each station has an identification and an input interface intended for allowing a number of inputs. The at least one device has a device call number. The configuration module is adapted for determining the identification and the number of inputs for each station; for generating a station call number for each station and a number of input call numbers corresponding with the number of inputs; and for configuring each station with the station call number and with the corresponding number of input call numbers. The configuration module is furthermore adapted for generating a pass-through table in which each input call number is associated with one or more device numbers of the at least one device, and for using this table for passing through a call signal associated with an input call number to a device, according to the pass-through table.

By providing a configuration module that is adapted such that it can automatically generate pass-through table on the basis of which call signals can be passed through from the station to one or more devices, a very flexible and user-friendly audio and/or video intercommunication system is provided. By providing such a configuration module a kind of telephone exchange is provided in the system, which can be configured automatically.

According to a preferred embodiment of the invention, the configuration module may furthermore be adapted to transmit to each device a list with, for each station, a related number of input call numbers or a number of identifications coupled therewith. Each device may then preferably be adapted to receive the list and to pass along one or more input call numbers of the list to the configuration module. The configuration module may thus be configured on the basis of lists received from one or more devices. According to another embodiment, each device can, for example, be automatically coupled to two inputs of the station, without transmitting lists. For example, for a family with children, the station can be provided with a door station provided with inputs that correspond with for instance "the parents", a "daughter" and a "son". A first input for the "parents" can for example be coupled to a first device (for example the mother's mobile phone) and a second device (for example the father's mobile phone), while a second input for the "daughter" is only coupled to her mobile phone, and a third input for the "son" is only coupled to his mobile phone. The system can be easily configured from the devices (in this case, the mobile phones) which pass on a list with the inputs to which they wish to be coupled to the configuration module. The at least one station may, for example, comprise a door station, but may also be a random internal or external station.

According to embodiments of the invention, the input interface may comprise a set of real or virtual buttons and the number of inputs corresponds with the number of buttons. According to an alternative, the input interface may comprise a touch screen on which clickable names or other clickable fields are provided. According to another variant, the input interface may be adapted to register a motion and/or speech, in which case the inputs may consist of different movements and/or different speech signals.

Preferably, each station may be adapted for transmitting video and/or audio data to a device, and each device may preferably be adapted for receiving and playing the video and/or audio data of a station. In this way, in case of, for example, an access control system, the person standing in front of the door can easily communicate with someone inside the house, without having to open the door. According to other embodiments, for example in case of observation systems, a person, for example nursing or care-providing personnel in case the observation system is for example located in a hospital or an elderly home, can be warned when the station registers a certain motion in a space where a patient or elderly person is present, and transmits this to the device in the space where nursing or care-providing personnel is present.

According to an embodiment of the invention, the configuration module may be adapted to receive by means of an IP-based Service Discovery Protocol, such as for example TCP/IP or UDP/IP, the identification and type information of each station, whereby the type information is such that the configuration module can deduce the number of inputs therefrom, in particular the number of buttons. Such a protocol allows to "discover" each station in a simple way by listening to the Service Discovery Protocol. For example, the Service Discovery Protocol may, for example, be one of the following: Domain Name System Based Service Discovery (DNS-SD), Universal Plug & Play (UPnP).

The identification of each station may preferably be a MAC address. This MAC address can optionally be used for generating the station call number and the number of corresponding input call numbers of the respective station. A person skilled in the art understands that numerous other identification addresses are possible. According to other embodiment, each device can have a Global Unique Identifier (GUID) or an "identification for vendor" (iPhone) as identification. According to a preferred embodiment, each station may be provided with an Application Programming Interface (API) and the configuration module may also be provided with an Application Programming Interface (API); these APIs may be configured for configuration of each station with the station call number and the associated number of input call numbers by means of the configuration module. This way, the configuration of the or each station can be done in a simple and automatic way, but it still allows amendments by the user when such amendments are necessary or desirable, which is a big advantage. These APIs are preferably adapted so that communication is possible by means of a Service Delivery protocol, for example one of the abovementioned Service Delivery protocols.

According to embodiments of the invention, the configuration module may be adapted to send a configuration file to each device and/or to each station. Making use of this configuration file, configuration of a device with the corresponding device call number and/or of a station with the corresponding station call number and with the corresponding number input call numbers, can easily be performed.

The device may, for example, be a fixed internal unit or a mobile unit. For example, the device may be a touch screen, a mobile phone such as a SIP phone, a tablet, etc.

According to a preferred embodiment, the configuration module may include a Session Initiation Protocol (SIP) server, and each station may be adapted to communicate with the configuration module and with each device by means of the SIP Protocol. Also, each device may preferably be adpated to communicate with the configuration module and with each external unit by means of the SIP Protocol. The SIP server may then be configured on the basis of the abovementioned pass-through table.

In a further aspect of the invention, a configuration module is provided for use in an audio and/or video intercommunication system according to embodiments of the invention. The configuration module may have the features described above. The configuration module may, for example, be built into a gateway, but may, according to other embodiments, also be built into a station, or be provided as a separate module.

The configuration module is adapted to determine the identification and the number of inputs for each station; to generate for each station a station call number and a number of input call numbers associated with the number of inputs and to configure each station with the station call number and with the corresponding number of input call numbers. The configuration module is further adapted for automatically generating a pass-through table in which each input call number is associated with one or more device numbers and for using this pass-through table for passing along a call signal associated with an input call number to a device according to the pass-through table. According to embodiments of the invention, the configuration module may be adapted to forward a list with, for each station, the number of input call numbers or identifications coupled therewith to each device, and wherein the configuration module is adapted for generating the pass-through table in which each input call number is associated with one or more device numbers according to a selection from the list received by a device.

Further, the configuration module may be adapted to receive, from each station, the identification and type information by means of an IP-based service discovery protocol, wherein the type information is such that the configuration module can deduce the number of inputs therefrom, wherein the service delivery protocol is one of the following: Domain Name System based Service Discovery (DNS-SD), Universal Plug and Play (UPnP).

The configuration module may be provided with an application programming interface (API) which is adapted for configuring each station with the station call number and with the number of input call numbers. Each API may be adapted to be able to communicate by means of the service delivery protocol.

The configuration module may comprise a Session Initiation Protocol (SIP) server, which SIP server is configured on the basis of the pass-through table.

According to still a further aspect, the present invention provides a method for automatically configuring an audio and/or video intercommunication system comprising at least one station with an identification and with an input interface set up to allow a number of inputs, at least one device with a device call number, and a configuration module. The method comprises a number of steps which are carried out in the configuration module. The method comprises determination in the configuration module of the identification and the number of inputs of each station; generation for each station of a station call number and a number of input call numbers; configuration of each station with the station call number and the number of input call numbers; and generation of a pass-through table in which each input call number is associated with one or more device numbers. According to embodiments of the invention, the method may furthermore comprise transmitting to each device a list with, for each station, the number of input call numbers or a number of identifications coupled therewith and receiving a selection from the list from each device. Generation of the pass-through table can then take place in accordance with the received selection(s).

Preferably, the configuration module may receive the identification and type information of each station by means of an IP-based service discovery protocol, for example TCP/IP or UDP/IP, whereby the type information is such that the configuration module can deduce the number of inputs therefrom. The service delivery protocol may for example be one of the following: Domain Name System based Service Discovery (DNS-SD), Universal Plug and Play (UPnP). Identification of each station is a unique number that may, for example, be a MAC address, a Global Unique Identifier (GUID) or an "identification for vendor" (iPhone).

The configuration module may preferably comprise a Session Initiation Protocol (SIP) server and the SIP server may preferably be configured on the basis of the pass-through table. In this way, the configuration module can function as a kind of telephone exchange.

### Brief description of the drawings

The invention will be further explained by means of a number of non-limiting exemplary embodiments of an audio and/or video intercommunication system and method according to the invention with reference to the figures attached, wherein:
Figure 1 schematically illustrates a method according to embodiments of the invention;
Figure 2 schematically illustrates an embodiment of an audio and/or video intercommunication system according to the invention as a component of a home automation installation;
Figure 3 schematically illustrates an embodiment of an audio and/or video intercommunication system according to the invention; and
Figure 4 schematically illustrates an embodiment of an observation system according to the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes only, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

Not all embodiments of the invention comprise all features of the invention. In the following description and claims, any of the claimed embodiments can be used in any combination.

In a first aspect, the present invention provides a method for automatically configuring an audio and/or video intercommunication system comprising at least one station with an identification and with an input interface that is adapted to allow a number of inputs; at least one device with a device call number, and a configuration module, wherein each station is adapted for transmitting video and/or audio data to a device, and each device is adapted for receiving and playing the video and/or audio data of a station. The method comprises, in the configuration module, determining the identification and the number of inputs of each station in the configuration module, generating for each station a station call number and a number of input call numbers, configuring each station with the station call number and the number of input call numbers, and generating a pass-through table in which each input call number is associated with one or more device numbers. The configuration module is further adapted to forward a list with, for each station, the number of input call numbers or identifications coupled therewith to a device; wherein the or each device is adapted to receive the list and to pass along a selection from the list to the configuration module. The configuration module is further set up for generating the pass-through table in correspondence with the received selection(s).

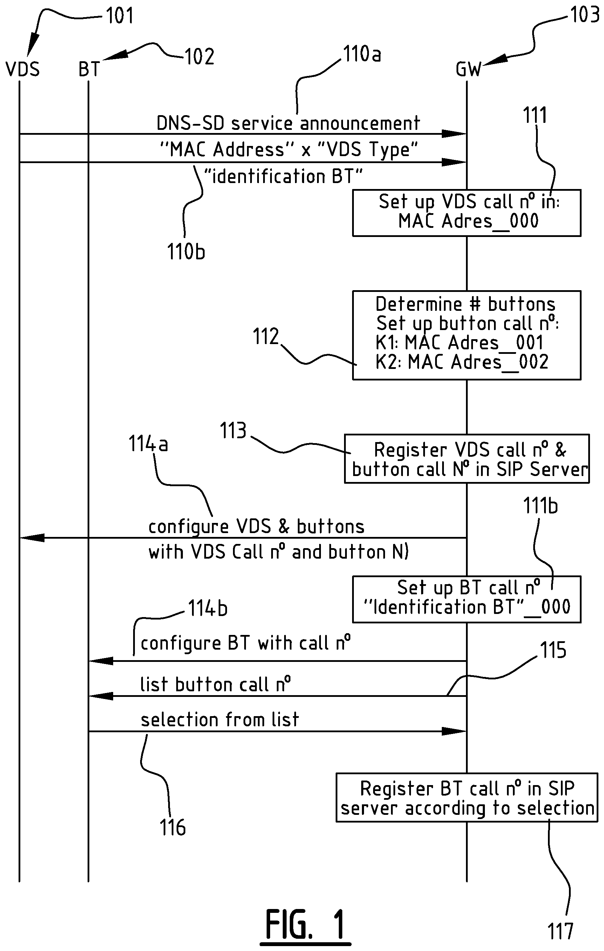

Figure 1 schematically illustrates a method for the automatic configuration of an audio and/or video intercommunication system according to an embodiment of the invention. The audio and/or video intercommunication system comprises a video door station (VDS) 101, an internal device (BT) 102, and a gateway (GW) 103 in which a configuration module is provided. The video door station 101 is provided with storage means where an identification, for example a MAC address, may be stored. Furthermore, the video door station 101 is provided with a user interface, typically several virtual or non-virtual call buttons, by which a number of different inputs are possible. In the illustrated embodiment, it is assumed that the video door station 101 is provided with n buttons K1, K2, ... Kn. The internal device can be an internal unit or a mobile facility such as a mobile smart phone or tablet. Each internal device is provided with an identification, for example a MAC address, a Global Unique Identifier (GUID) or an 'Identifier for vendor" (e.g. iPhone).

In a first step of the method according to this embodiment, gateway 103 "discovers" one or more video door stations 101. More particularly, according to the present embodiment, gateway 103 listens to DNS-SD service messages of video door station 101, for example through Avahi software. Avahi is a known free zero configuration networking implementation with a system for DNS-SD service discovery. By initializing gateway 103, the existing video door stations 101 are discovered via DNS-SD, whereby for each video door station 101 the MAC address and the type of video door station is communicated to the gateway, see step 110a in figure 1. In a similar way, the existing internal units 102 are discovered via DNS-SD, whereby for each internal unit 102 an identification ("identification BT") is communicated to gateway 103, see step 110b. The type of video door station will allow to determine the number of buttons n, for example by means of a table stored in the gateway, in which for each type the number of buttons is specified. Gateway 103 can have an identification in the form of, for example, an IP address or a DNS resolvable name. The identification of gateway 103 is made known at each station 101 and at each device 102 (not illustrated). When resetting gateway 103, this making-known step must again take place.

In steps 111a, 112, 113, 111b and 117 gateway 103 is configured. In step 111a, a VDS call number is set up as the MAC address followed by "_000". It has to be noted that this is only an example, and that there are many other ways to set up call numbers. This VDS call number will be used for calling the video door station 101 from an internal device 102, and as a source address for SIP communication, see further. When the MAC address is for example 001D02437F88, then the VDS call number that is used as the SIP address is 001D02437F88_000. This SIP address ("address of record") is used to register the video door station at the SIP server of the gateway, see step 113 which is discussed below. This VDS call number can also be used as VDS identification in an application programming interface (API) of the gateway 103. A button call number is determined for all buttons of a video door station 101 in a similar way (see step 112). For example, this can be done by
- adding "_001" to the MAC address of the video door station 101 for button 1; as such, for button 1 (K1) 001D02437F88_001 is assigned as the button call number
- adding "_002" to the MAC address of video door station 101 for button 2, etc.

These button call numbers can also be used as button identification in an application programming interface of gateway 103.

After the VDS call numbers and button call numbers are determined in step 112, the SIP server of the gateway 103 can be configured in step 113, whereby the VDS call number is registered and each button is registered.

Then, the VDS call number and the button call numbers are configured in the video door station 101, see step 114a. The gateway 103 can hereby make use of "VDS API calls" in order to configure each button with the corresponding call number ("address of record").

In the embodiment illustrated in figure 1, step 114a is carried out after step 113. However, step 113 may, according to other embodiments also be carried out after step 114a. Furthermore, the SIP server will, prior to carrying out step 113, typically be reset, whereby all addresses and call numbers are removed. The SIP server parameter of the video door station 101 may hereby be set up on the gateway DNS resolvable name making use of a video door station configuration application programming interface (API). According to an alternative, instead of a DNS resolvable name, an IP address can be used.

In step 111b, a BT call number is set up as the BT identification followed by "_000". Also here, many other ways can be thought of by a person skilled in the art. Step 111b may also be carried out before step 111a or in parallel with step 111a. Subsequently, the BT call number is configured in the corresponding internal device 102, see step 114b. Also this step 114b could be carried out earlier if step 111b is carried out earlier.

In step 115 a list with all button call numbers is sent to the one or more internal devices 102. Each internal device 102 makes a selection from this list and sends this selection to gateway 103, see step 116. In step 117 the device call numbers are registered in the SIP server of gateway 103 in accordance with the received selection. Step 117 can for example be made possible as follows. For each video door station 101, a call group is created in Asterisk software. This Asterix software supports the SIP protocol. Each of the discovered internal devices 102 can be added automatically to the call groups, taking the lists into account.

According to a variant, steps 115 and 116 are not carried out and the registration of the BT call numbers in the SIP server (step 117) take place automatically, whereby for instance each BT call number is coupled automatically to one or more button call numbers.

After carrying out the method illustrated in figure 1, the audio and/or video intercommunication system is configured and a communication can be achieved between the video door station 101 and one or more of the internal stations 102 after pressing one of buttons K1, K2, ..., Kn of the video door station 101. When a user presses button K1, and this button K1 is according to the list associated with a first internal device 102 and a second internal device 102, then gateway 103 will make sure that a call signal is released by both internal devices 102. After accepting the call signal at one of the internal devices 102, a SIP communication can take place directly between the video door station 101 and the internal device 102. This communication then further takes place according to a standard SIP communication.

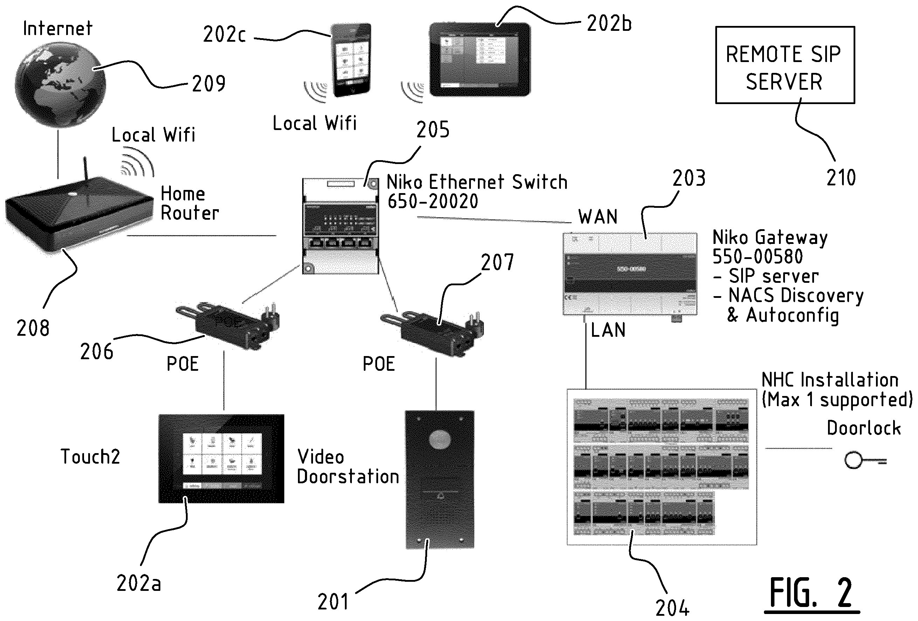

Figure 2 schematically illustrates an embodiment of an audio and/or video intercommunication system according to the invention that is provided in a home. The audio and/or video intercommunication system comprises a video door station 201, three internal devices 202a, 202b, 202c and a gateway 203. The first internal device 202a may, according to the embodiment illustrated, be a fixed internal unit, the second internal device 202b may be a SIP tablet, and the third internal device 202c may be a SIP phone. The home may be connected with the Internet via a home router 208. The internal devices 202b, 202c can communicate with the home router 208 via a local Wifi network. The home route 208 is further connected with the gateway 203 via an Ethernet switch 205. The video door station 201 and the internal unit 202a are connected with the Ethernet switch 205, and thus consequently with gateway 203, via a Power over Ethernet (PoE) switch. The Ethernet switch 205 is more particularly connected with a WAN gate of the gateway 203. If the gateway should have a plurality of WAN gates, the switch 205 could be left out. Furthermore, the gateway 203 is provided with a LAN gate that is connected with electrical installation 204.

The gateway 203 is adapted to determine an identification, for example a MAC address, and a number of inputs, typically a number of buttons, of the video door station 201. Furthermore, the gateway 203 is adapted to generate a station call number for the video door station 201 and a number of input numbers for the buttons, and to configure the video door station 201 with the generated station call number and the corresponding number of button call numbers. The gateway 203 is further adapted to transmit a list with the button call numbers to the internal devices 202a, 202b, 202c. Each internal device 202a, 202b, 202c is adapted to receive this list, and to pass on one or more input call numbers of the list to the gateway 203. Furthermore, the gateway 203 is adapted to generate a pass-through table with for each button call number a device number of an internal device 202a, 202b, 202c and to use this pass-through table for passing on a call signal associated with a button call number to an internal device 202a, 202b, 202c in accordance with the pass-through table. For further clarification, an example will be given herebelow whereby it is assumed that the video door station 201 is provided with three buttons. The gateway 203 can then generate the following call numbers:
- Video door station: call number 0;
- Button 1: call number 1;
- Button 2: call number 2;
- Button 3: call number 3.

It is further assumed that the internal devices 202a, 202b, 202c have respectively call numbers A, B and C. The pass-through table can then, for example, look as follows:

| **Button numbers** | **Coupled internal units** |
|---|---|
| Call number 1 | Call number A, B |
| Call number 2 | Call number A, B, C |
| Call number 3 | Call number C |

If a call is made at button 1, internal devices 202a, 202b will receive a call signal. After the call signal has been forwarded via the gateway 203 to an internal device, internal device 202a or 202b will communicate directly with the video door station 201 for exchanging video and/or data. The video door station 201 is therefore adapted for transmitting of video and audio data. Each internal device 202a, 202b, 202c is furthermore preferably adapted for receiving and playing video and/or audio data of the video door station 201.

According to a possible embodiment of the invention, the gateway 203 may be adapted to receive the identification and type information of the video door station through a Service Discovery Protocol on the basis of TCP/IP, whereby the type information is such that gateway 203 can deduce the number of buttons therefrom. This Service Delivery Protocol can, for example, be a DNS-based Service Discovery (DNS-SD) protocol, or a Universal Plug & Play (UPnP) protocol. The gateway 203 furthermore preferably comprises a Session Imitation Protocol (SIP) server, and the video door station 201 and each internal device 202a, 202b, 202c may preferably be adapted to communicate through the SIP protocol with the gateway 203 and with each other. The pass-through table illustrated above can be used to set up the SIP server. The gateway 203 then works as a telephone exchange for the video door station 201.

According to a further developed embodiment, the gateway 203 may be adapted to communicate with a remote SIP server 210. When an internal device 202c is located outside the residence (not shown), near remote SIP server 210, the device call number of internal device 202c can be registered in remote SIP server 210 so that a call signal received by the gateway 203 can be passed on to the internal device 202c located outside the residence.

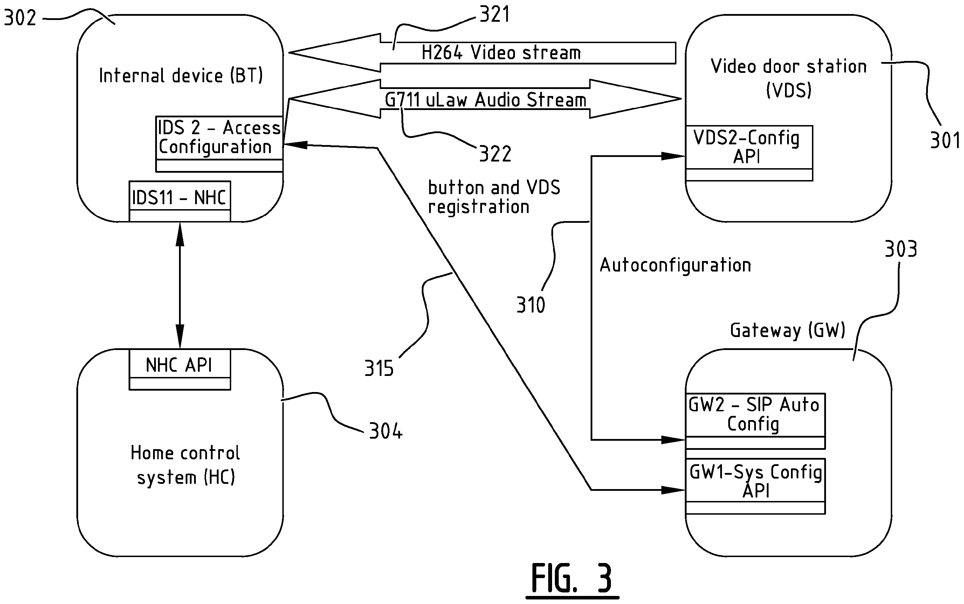

Figure 3 illustrates a more detailed embodiment of an audio and/or video intercommunication system according to the invention. The audio and/or video intercommunication system comprises a video door station (VDS) 301, an internal device 302 and a gateway 303. The gateway 303 is provided with a first interface module "GW2-SIP Auto Config" that is adapted to communicate with an interface module "VDS2-Config API" of the video door station 301. These interface modules allow the configuration of the video door station 301 with a VDS call number and a number of input call numbers, typically button call numbers. The gateway 303 is provided with a second interface module "GW1-SYS Config API" that is adapted to exchange data with an "IDS2-Access Configuration" interface module of the internal device 302. These interface modules allow a user to pass along a selection of the buttons made by the internal device 302 to the gateway 303 so as to make an exception to the automatic behaviour. The gateway 303 can then use this information to generate a pass-through table and to configure the SIP server. An internal device 302 is furthermore typically provided with a second interface module "IDS11-NHC" as a result of which the internal device 302 can communicate with an interface module "NHC-API" of a control interface 304 of an electrical installation. In that way, a user can also control, via the internal device 302, the electrical devices that are coupled to the electrical installation, such as lighting components, a thermostat, etc.

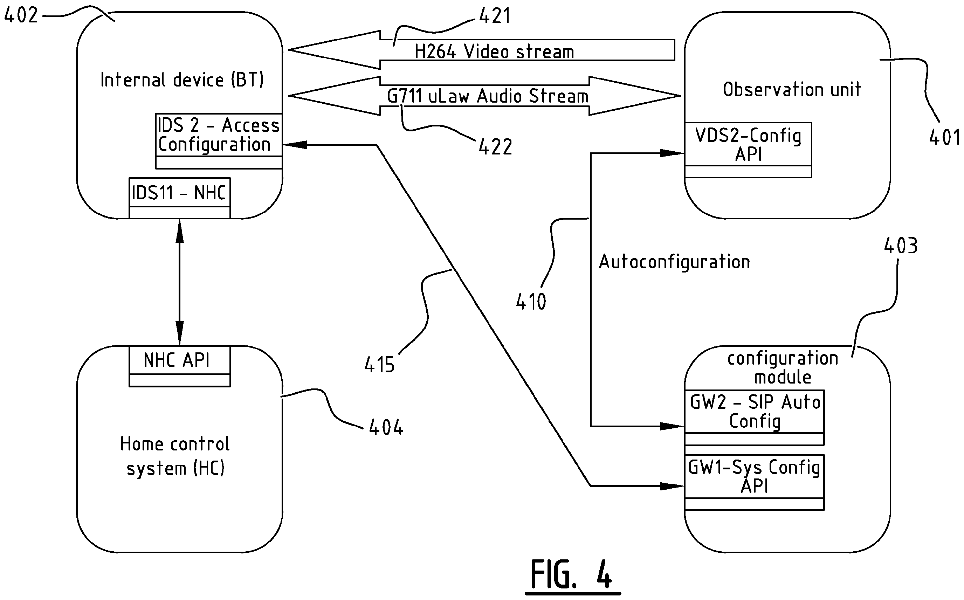

Figure 4 illustrates another embodiment of an audio and/or video intercommunication system according to the invention. According to this embodiment, the audio and/or video intercommunication system is an observation system.

The observation system illustrated in Figure 4 comprises at least one observation unit 401, an internal device 402 and a configuration module 403. The observation unit 401 may, for example, be built into a ceiling or can be placed onto a wall. The observation unit 401 may, for example, comprise a camera and/or a microphone and/or a motion detector.

The configuration module 403 is provided with a first interface module that is adapted to communicate with the observation unit 401. This first interface module allows to configure observation unit 401 with an observation unit call number and a call number coupled to an audio and/or image detection system that can be used as a trigger on the basis of motion and/or image and/or sound for the call number. In that way, an audio and/or video connection can be made between the observation unit 401 and the internal device 402.

The configuration module 403 adapted to exchange data with an interface module "IDS2-Access Configuration" of the internal device 402. This second interface module allows a user to pass on a selection of observation units 401 or observation triggers (observation trigger can be an image, sound and motion) to the configuration module 403.

The configuration module 403 can use this information then to generate a pass-through table and to configure the SIP server. An internal device 402 is furthermore typically provided with a third interface module "IDS11-NHC" so that the internal device 402 can communicate with an interface module "NHC API" of a control interface 404 of an electrical installation. In that way, a user can, via the internal device 402, also control the electrical devices which are coupled to the electrical facility, such as lighting components, a thermostat, etc.

The observation system illustrated in Figure 4 can for example be used to warn an individual, such as for instance nursing or care providing personnel in a hospital or elderly home, when the observation unit 401 for example has registered a certain movement or a certain sound in a space where a patient or an old person is located. The registered movement or sound can then be forwarded to the internal device 402 that, for example, can be present in the space where nursing or care providing personnel is present. A person skilled in the art understands that this is not the only application of the observation system illustrated in Figure 4, and that any other application that can be thought of by a person skilled in the art is possible in the scope of the present invention.

The invention is not limited to the exemplary embodiments illustrated above and a person skilled in the art understands that numerous variants can be thought of within the framework of the invention that is only determined by the following claims.

## Claims

1. An audio and/or video intercommunication system comprising:
- at least one station (101, 201, 301, 401) with an identification and with an input interface that is adapted to allow a number of inputs;
- at least one device (102, 202, 302, 402) with a device call number;
whereby each station (101, 201, 301, 401) is adapted for transmitting video and/or audio data to a device (102, 202, 302, 402), and each device (102, 202, 302, 402) is set up for receiving and playing video and/or audio data of a station;
- a configuration module adapted to
- determine the identification and the number of inputs of each station (101, 201, 301, 401);
- generate for each station (101, 201, 301, 401) a station call number and a number of input call numbers associated with the number of inputs;
- configure each station (101, 201, 301, 401) with the station call number and the corresponding number of input numbers; and
**characterized in that** the configuration module is adapted for automatically generating a pass-through table in which each input call number is associated with one or more device numbers and for using this table for passing along a call signal associated with an input call number to a device (102, 202, 302, 402) according to the pass-through table and that the configuration module is further adapted to forward a list with, for each station (101, 201, 301, 401), the number of input call numbers or identifications coupled therewith to a device (102, 202, 302, 402); wherein the or each device (102, 202, 302, 402) is adapted to receive the list and to pass along a selection from the list to the configuration module; and that the configuration module is set up for generating the pass-through table in correspondence with the received selection(s).

2. System according to claim 1, wherein the input interface comprises a set of buttons and wherein each input call number is associated with a button.

3. System according to claim, 1 or 2 wherein the configuration module is adapted to receive through an IP-based service discovery protocol, the identification and type information from each station (101, 201, 301, 401), whereby the type information is such that the configuration module can deduce the number of inputs from it.

4. System according to any of the previous claims, wherein each station (101, 201, 301, 401) is provided with an application programming interface, API, and wherein the configuration module is provided with an application programming interface, API; which APIs are adapted for configuring by means of the configuration module of each station (101, 201, 301, 401) with the station call number and with the corresponding number of input call numbers.

5. System according to any of the previous claims, wherein the configuration module comprises a Session Initiation Protocol, SIP, server; each station (101, 201, 301, 401) is adapted to communicate with the configuration module and with each device (102, 202, 302, 402) by means of the Session Initiation Protocol, SIP; and each device (102, 202, 302, 402) is adapted to communicate with the configuration module and with each station (101, 201, 301, 401) by means of the Session Initiation Protocol, SIP; the SIP server being configured on the basis of the pass-through table.

6. Configuration module for use in a system according to any of the previous claims; the configuration module being adapted
- to determine the identification and the number of inputs for each station (101, 201, 301, 401);
- to generate for each station (101, 201, 301, 401) a station call number and a number of input call numbers associated with the number of inputs;
- to configure each station (101, 201, 301, 401) with the station call number and with the corresponding number of input call numbers; and
**characterized in that** the configuration module is adapted for automatically generating a pass-through table in which each input call number is associated with one or more device numbers and for using this pass-through table for passing along a call signal associated with an input call number to a device (102, 202, 302, 402) according to the pass-through table and that the configuration module is adapted to forward a list with, for each station (101, 201, 301, 401), the number of input call numbers or identifications coupled therewith to each device (102, 202, 302, 402), and wherein the configuration module is adapted for generating the pass-through table in which each input call number is associated with one or more device numbers according to a selection from the list received by a device (102, 202, 302, 402).

7. Configuration module according to claim 6, wherein the configuration module is adapted to receive, from each station (101, 201, 301, 401), the identification and type information by means of an IP-based service discovery protocol, wherein the type information is such that the configuration module can deduce the number of inputs therefrom, wherein the service delivery protocol is one of the following: Domain Name System based Service Discovery DNS-SD, Universal Plug and Play, UPnP.

8. Configuration module according to any of claims 6 or 7, wherein the configuration module is provided with an application programming interface, API, which is adapted for configuring each station (101, 201, 301, 401) with the station call number and with the number of input call numbers.

9. Configuration module according to any of claims 6 to 8, wherein the configuration module comprises a Session Initiation Protocol, SIP, server, which SIP server is configured on the basis of the pass-through table.

10. Method for the automatically configuring an audio and/or video intercommunication system comprising at least one station (101, 201, 301, 401) with an identification and with an input interface that is adapted to allow a number of inputs; at least one device (102, 202, 302, 402) with a device call number, and a configuration module, wherein each station (101, 201, 301, 401) is adapted for transmitting video and/or audio data to a device (102, 202, 302, 402), and each device (102, 202, 302, 402) is adapted for receiving and playing the video and/or audio data of a station (101, 201, 301, 401);
wherein the method comprises, in the configuration module:
- determining the identification and the number of inputs of each station (101, 201, 301, 401) in the configuration module;
- generating for each station (101, 201, 301, 401) a station call number and a number of input call numbers; and
- configuring each station (101, 201, 301, 401) with the station call number and the number of input call numbers;
**characterized in that** the method furthermore comprises
- automatically generating a pass-through table in which each input call number is associated with one or more device numbers,
- using this table for passing along a call signal associated with an input call number to a device (102, 202, 302, 402) according to the pass-through table,
- transmitting to each device (102, 202, 302, 402) a list with for each station (101, 201, 301, 401) the number of input call numbers or a number of identifications coupled therewith;
- receiving a selection from the list from each device (102, 202, 302, 402);
wherein the pass-through table is generated in correspondence with the received selection(s).

11. Method according to claim 10, wherein the configuration module receives the identification and type information of each station (101, 201, 301, 401) by means of an IP-based service discovery protocol, wherein the type information is such that the configuration module can deduce the number of inputs therefrom, and wherein the service delivery protocol is one of the following: Domain Name System based Service Discovery, DNS-SD, Universal Plug and Play, (UPnP).

12. Method according to claim 10 or 11, wherein the configuration module comprises a Session Initiation Protocol, SIP, server; and the SIP server is configured on the basis of the pass-through table.

## Patentansprüche

1. Ein Audio- und/oder Video-Interkommunikationssystem, das Folgendes umfassend:
- mindestens eine Station (101, 201, 301, 401) mit einer Identifikation und mit einer Eingabeschnittstelle, die dafür eingerichtet ist, eine Anzahl von Eingaben zu ermöglichen,
- mindestens ein Gerät (102, 202, 302, 402) mit einer Geräterufnummer,
wobei jede Station (101, 201, 301, 401) zum Übertragen von Video- und/oder Audiodaten an ein Gerät (102, 202, 302, 402) eingerichtet ist und jedes Gerät (102, 202, 302, 402) zum Empfangen und Abspielen von Video- und/oder Audiodaten einer Station aufgebaut ist,
- ein Konfigurationsmodul, das dafür eingerichtet ist,
- die Identifikation und die Anzahl von Eingaben jeder Station (101, 201, 301, 401) zu bestimmen,
- für jede Station (101, 201, 301, 401) eine Stationsrufnummer und eine Anzahl von Eingaberufnummern, die mit der Anzahl von Eingaben verknüpft ist, zu erzeugen,
- jede Station (101, 201, 301, 401) mit der Stationsrufnummer und der entsprechenden Anzahl von Eingabenummern zu konfigurieren, und
**dadurch gekennzeichnet, dass** das Konfigurationsmodul eingerichtet ist zum automatischen Erzeugen einer Durchleitungstabelle, in der jede Eingaberufnummer mit einer oder mehreren Gerätenummern verknüpft wird, und zum Verwenden dieser Tabelle zum Weiterleiten eines Rufsignals, das mit einer Eingaberufnummer verknüpft ist, an ein Gerät (102, 202, 302, 402) entsprechend der Durchleitungstabelle, und dass das Konfigurationsmodul ferner dafür eingerichtet ist, eine Liste mit, für jede Station (101, 201, 301, 401), der Anzahl von Eingaberufnummern oder Identifikationen, die damit verbunden sind, an ein Gerät (102, 202, 302, 402) weiterzuleiten, wobei das oder jedes Gerät (102, 202, 302, 402) dafür eingerichtet ist, die Liste zu empfangen und eine Auswahl von der Liste an das Konfigurationsmodul weiterzuleiten, und dass das Konfigurationsmodul aufgebaut ist zum Erzeugen der Durchleitungstabelle in Übereinstimmung mit der/den empfangenen Auswahl(en).

2. System nach Anspruch 1, wobei die Eingabeschnittstelle einen Satz von Knöpfen umfasst und wobei jede Eingaberufnummer mit einem Knopf verknüpft ist.

3. System nach Anspruch 1 oder 2, wobei das Konfigurationsmodul dafür eingerichtet ist, durch ein IP-gestütztes Dienstermittlungsprotokoll die Identifikations- und Typinformationen von jeder Station (101, 201, 301, 401) zu empfangen, wobei die Typinformationen derart sind, dass das Konfigurationsmodul aus ihnen auf die Anzahl von Eingaben schließen kann.

4. System nach einem der vorhergehenden Ansprüche, wobei jede Station (101, 201, 301, 401) mit einer Anwendungsprogramm-Schnittstelle, API, versehen ist und wobei das Konfigurationsmodul mit einer Anwendungsprogramm-Schnittstelle, API, versehen ist, wobei die APIs eingerichtet sind zum Konfigurieren jeder Station (101, 201, 301, 401) mit der Stationsrufnummer und mit der entsprechenden Anzahl von Eingaberufnummern mit Hilfe des Konfigurationsmoduls.

5. System nach einem der vorhergehenden Ansprüche, wobei das Konfigurationsmodul einen Session-Initiation-Protocol-, SIP-, Server umfasst; jede Station (101, 201, 301, 401) dafür eingerichtet ist, mit dem Konfigurationsmodul und mit jedem Gerät (102, 202, 302, 402) mit Hilfe des Session Initiation Protocol, SIP, zu kommunizieren; und jedes Gerät (102, 202, 302, 402) dafür eingerichtet ist, mit dem Konfigurationsmodul und mit jeder Station (101, 201, 301, 401) mit Hilfe des Session Initiation Protocol, SIP, zu kommunizieren, wobei der SIP-Server auf der Grundlage der Durchleitungstabelle konfiguriert ist.

6. Konfigurationsmodul zur Verwendung in einem System nach einem der vorhergehenden Ansprüche, wobei das Konfigurationsmodul dafür eingerichtet ist,
- die Identifikation und die Anzahl von Eingaben für jede Station (101, 201, 301, 401) zu bestimmen,
- für jede Station (101, 201, 301, 401) eine Stationsrufnummer und eine Anzahl von Eingaberufnummern, die mit der Anzahl von Eingaben verknüpft ist, zu erzeugen,
- jede Station (101, 201, 301, 401) mit der Stationsrufnummer und mit der entsprechenden Anzahl von Eingabenummern zu konfigurieren, und
**dadurch gekennzeichnet ist, dass** das Konfigurationsmodul eingerichtet ist zum automatischen Erzeugen einer Durchleitungstabelle, in der jede Eingaberufnummer mit einer oder mehreren Gerätenummern verknüpft wird, und zum Verwenden dieser Durchleitungstabelle zum Weiterleiten eines Rufsignals, das mit einer Eingaberufnummer verknüpft ist, an ein Gerät (102, 202, 302, 402) entsprechend der Durchleitungstabelle, und dass das Konfigurationsmodul dafür eingerichtet ist, eine Liste mit, für jede Station (101, 201, 301, 401), der Anzahl von Eingaberufnummern oder Identifikationen, die damit verbunden sind, an jedes Gerät (102, 202, 302, 402) weiterzuleiten, wobei das Konfigurationsmodul eingerichtet ist zum Erzeugen der Durchleitungstabelle, in der jede Eingaberufnummer mit einer oder mehreren Gerätenummern verknüpft wird, entsprechend einer Auswahl von der durch ein Gerät (102, 202, 302, 402) empfangenen Liste.

7. Konfigurationsmodul nach Anspruch 6, wobei das Konfigurationsmodul dafür eingerichtet ist, mit Hilfe eines IP-gestützten Dienstermittlungsprotokolls die Identifikations- und Typinformationen von jeder Station (101, 201, 301, 401) zu empfangen, wobei die Typinformationen derart sind, dass das Konfigurationsmodul aus ihnen auf die Anzahl von Eingaben schließen kann, wobei das Dienstermittlungsprotokoll eines der folgenden ist: Domain Name System based Service Discovery, DNS-SD, Universal Plug and Play, UPnP.

8. Konfigurationsmodul nach einem der Ansprüche 6 oder 7, wobei das Konfigurationsmodul mit einer Anwendungsprogramm-Schnittstelle, API, versehen ist, die eingerichtet ist zum Konfigurieren jeder Station (101, 201, 301, 401) mit der Stationsrufnummer und mit der Anzahl von Eingaberufnummern.

9. Konfigurationsmodul nach einem der Ansprüche 6 bis 8, wobei das Konfigurationsmodul einen Session-Initiation-Protocol-, SIP-, Server umfasst, wobei der SIP-Server auf der Grundlage der Durchleitungstabelle konfiguriert ist.

10. Verfahren zum automatischen Konfigurieren eines Audio- und/oder Video-Interkommunikationssystems, das wenigstens eine Station (101, 201, 301, 401) mit einer Identifikation und mit einer Eingabeschnittstelle, die dafür eingerichtet ist, eine Anzahl von Eingaben zu ermöglichen; wenigstens ein Gerät (102, 202, 302, 402) mit einer Geräterufnummer und ein Konfigurationsmodul umfasst, wobei jede Station (101, 201, 301, 401) zum Übertragen von Video- und/oder Audiodaten an ein Gerät (102, 202, 302, 402) eingerichtet ist und jedes Gerät (102, 202, 302, 402) zum Empfangen und Abspielen der Video- und/oder Audiodaten einer Station (101, 201, 301, 401) eingerichtet ist,
wobei das Verfahren, in dem Konfigurationsmodul, Folgendes umfasst:
- Bestimmen der Identifikation und der Anzahl von Eingaben jeder Station (101, 201, 301, 401) in dem Konfigurationsmodul,
- Erzeugen einer Stationsrufnummer und einer Anzahl von Eingaberufnummern für jede Station (101, 201, 301, 401), und
- Konfigurieren jeder Station (101, 201, 301, 401) mit der Stationsrufnummer und der Anzahl von Eingabenummern,
**dadurch gekennzeichnet, dass** das Verfahren darüber hinaus Folgendes umfasst:
- automatisches Erzeugen einer Durchleitungstabelle, in der jede Eingaberufnummer mit einer oder mehreren Gerätenummern verknüpft wird,
- Verwenden dieser Tabelle zum Weiterleiten eines Rufsignals, das mit einer Eingaberufnummer verknüpft ist, an ein Gerät (102, 202, 302, 402) entsprechend der Durchleitungs tabelle,
- Weiterleiten einer Liste mit, für jede Station (101, 201, 301, 401), der Anzahl von Eingaberufnummern oder einer Anzahl von Identifikationen, die damit verbunden sind, an ein Gerät (102, 202, 302, 402),
- Empfangen einer Auswahl von der Liste von jedem Gerät (102, 202, 302, 402),
wobei die Durchleitungstabelle in Übereinstimmung mit der/den empfangenen Auswahl(en) erzeugt wird.

11. Verfahren nach Anspruch 10, wobei das Konfigurationsmodul die Identifikations- und Typinformationen jeder Station (101, 201, 301, 401) mit Hilfe eines IP-gestützten Dienstermittlungsprotokolls empfängt, wobei die Typinformationen derart sind, dass das Konfigurationsmodul aus ihnen auf die Anzahl von Eingaben schließen kann, und wobei das Dienstermittlungsprotokoll eines der folgenden ist: Domain Name System based Service Discovery, DNS-SD, Universal Plug and Play, UPnP.

12. Verfahren nach Anspruch 10 oder 11, wobei das Konfigurationsmodul einen Session-Initiation-Protocol-, SIP-, Server umfasst und der SIP-Server auf der Grundlage der Durchleitungstabelle konfiguriert ist.

## Revendications

1. Un système d'intercommunication audio et/ou vidéo comprenant :
- au moins une station (101, 201, 301, 401) avec une identification et avec une interface d'entrée qui est adaptée pour permettre un nombre d'entrées ;
- au moins un dispositif (102, 202, 302, 402) avec un numéro d'appel de dispositif ;
dans lequel chaque station (101, 201, 301, 401) est adaptée pour transmettre des données vidéo et/ou audio à un dispositif (102, 202, 302, 402), et chaque dispositif (102, 202, 302, 402) est configuré pour recevoir et lire des données vidéo et/ou audio d'une station ;
- un module de configuration adapté pour
- déterminer l'identification et le nombre d'entrées de chaque station (101, 201, 301, 401) ;
- générer pour chaque station (101, 201, 301, 401) un numéro d'appel de station et un nombre de numéros d'appel d'entrée associé au nombre d'entrées ;
- configurer chaque station (101, 201, 301, 401) avec le numéro d'appel de station et le nombre correspondant de numéros d'entrée ; et
**caractérisé en ce que** le module de configuration est adapté pour générer automatiquement une table d'intercommunication dans laquelle chaque numéro d'appel d'entrée est associé à un ou plusieurs numéros de dispositif et pour utiliser cette table pour transférer un signal d'appel associé à un numéro d'appel d'entrée à un dispositif (102, 202, 302, 402) selon la table d'intercommunication et **en ce que** le module de configuration est en outre adapté pour acheminer une liste avec, pour chaque station (101, 201, 301, 401), le nombre de numéros d'appel d'entrée ou d'identifications couplées à celle-ci à un dispositif (102, 202, 302, 402) ; dans lequel le ou chaque dispositif (102, 202, 302, 402) est adapté pour recevoir la liste et pour transférer une sélection de la liste au module de configuration ; et **en ce que** le module de configuration est réglé pour générer la table d'intercommunication de façon correspondante avec la ou les sélections reçues.

2. Système selon la revendication 1, dans lequel l'interface d'entrée comprend un jeu de boutons et dans lequel chaque numéro d'appel d'entrée est associé à un bouton.

3. Système selon la revendication 1 ou 2, dans lequel le module de configuration est adapté pour recevoir par l'intermédiaire d'un protocole de découverte de service IP, l'identification et des informations de type en provenance de chaque station (101, 201, 301, 401), moyennant quoi les informations de type sont telles que le module de configuration peut déduire le nombre d'entrées à partir de celles-ci.

4. Système selon l'une quelconque des revendications précédentes, dans lequel chaque station (101, 201, 301, 401) est pourvue d'une interface de programmation d'application, API, et dans lequel le module de configuration est pourvu d'une interface de programmation d'application, API, lesquelles API sont adaptées pour se configurer au moyen du module de configuration de chaque station (101, 201, 301, 401) avec le numéro d'appel de station et avec le nombre correspondant de numéros d'appel d'entrée.

5. Système selon l'une quelconque des revendications précédentes, dans lequel le module de configuration comprend un serveur de protocole d'ouverture de session, SIP ; chaque station (101, 201, 301, 401) est adaptée pour communiquer avec le module de configuration et avec chaque dispositif (102, 202, 302, 402) au moyen du protocole d'ouverture de session, SIP ; et chaque dispositif (102, 202, 302, 402) est adapté pour communiquer avec le module de configuration et avec chaque station (101, 201, 301, 401) au moyen du protocole d'ouverture de session, SIP ; le serveur SIP étant configuré sur la base de la table d'intercommunication.

6. Module de configuration destiné à être utilisé dans un système selon l'une quelconque des revendications précédentes ; le module de configuration étant adapté
- pour déterminer l'identification et le nombre d'entrées pour chaque station (101, 201, 301, 401) ;
- pour générer pour chaque station (101, 201, 301, 401) un numéro d'appel de station et un nombre de numéros d'appel d'entrée associé au nombre d'entrées ;
- pour configurer chaque station (101, 201, 301, 401) avec le numéro d'appel de station et avec le nombre correspondant de numéros d'appel d'entrée ; et
**caractérisé en ce que** le module de configuration est adapté pour générer automatiquement une table d'intercommunication dans laquelle chaque numéro d'appel d'entrée est associé à un ou plusieurs numéros de dispositif et pour utiliser cette table d'intercommunication pour transférer un signal d'appel associé à un numéro d'appel d'entrée à un dispositif (102, 202, 302, 402) selon la table d'intercommunication et **en ce que** le module de configuration est adapté pour acheminer une liste avec, pour chaque station (101, 201, 301, 401), le nombre de numéros d'appel d'entrée ou d'identifications couplées à celle-ci à chaque dispositif (102, 202, 302, 402), et dans lequel le module de configuration est adapté pour générer la table d'intercommunication dans laquelle chaque numéro d'appel d'entrée est associé à un ou plusieurs numéros de dispositif selon une sélection de la liste reçue par un dispositif (102, 202, 302, 402).

7. Module de configuration selon la revendication 6, dans lequel le module de configuration est adapté pour recevoir, en provenance de chaque station (101, 201, 301, 401), l'identification et des informations de type au moyen d'un protocole de découverte de service IP, dans lequel les informations de type sont telles que le module de configuration peut déduire le nombre d'entrées à partir de celles-ci, dans lequel le protocole de distribution de service est l'un des suivants : une découverte de service par système de nom de domaine, DNS-SD, un protocole UPnP (Universal Plug and Play).

8. Module de configuration selon l'une quelconque des revendications 6 ou 7, dans lequel le module de configuration est pourvu d'une interface de programmation d'application, API, qui est adaptée pour configurer chaque station (101, 201, 301, 401) avec un numéro d'appel de station et avec le nombre de numéros d'appel d'entrée.

9. Module de configuration selon l'une quelconque des revendications 6 à 8, dans lequel le module de configuration comprend un serveur de protocole d'ouverture de session, SIP, lequel serveur SIP est configuré sur la base de la table d'intercommunication.

10. Procédé de configuration automatique d'un système d'intercommunication audio et/ou vidéo comprenant au moins une station (101, 201, 301, 401) avec une identification et avec une interface d'entrée qui est adaptée pour permettre un nombre d'entrées ; au moins un dispositif (102, 202, 302, 402) avec un numéro d'appel de dispositif, et un module de configuration, dans lequel chaque station (101, 201, 301, 401) est adaptée pour transmettre des données vidéo et/ou audio à un dispositif (102, 202, 302, 402), et chaque dispositif (102, 202, 302, 402) est adapté pour recevoir et lire les données vidéo et/ou audio d'une station (101, 201, 301, 401) ;
dans lequel le procédé comprend, dans le module de configuration :
- la détermination de l'identification et du nombre d'entrées de chaque station (101, 201, 301, 401) dans le module de configuration ;
- la génération pour chaque station (101, 201, 301, 401) d'un numéro d'appel de station et d'un nombre de numéros d'appel d'entrée ; et
- la configuration de chaque station (101, 201, 301, 401) avec le numéro d'appel de station et le nombre de numéros d'appel d'entrée ;
**caractérisé en ce que** le procédé comprend en outre
- la génération automatique d'une table d'intercommunication dans laquelle chaque numéro d'appel d'entrée est associé à un ou plusieurs numéros de dispositif,
- l'utilisation de cette table pour transférer un signal d'appel associé à un numéro d'appel d'entrée à un dispositif (102, 202, 302, 402) selon la table d'intercommunication,
- la transmission à chaque dispositif (102, 202, 302, 402) d'une liste avec, pour chaque station (101, 201, 301, 401), le nombre de numéros d'appel d'entrée ou un nombre d'identifications couplées à celle-ci ;
- la réception d'une sélection de la liste en provenance de chaque dispositif (102, 202, 302, 402) ;
dans lequel la table d'intercommunication est générée de façon correspondante à la ou les sélections reçues.

11. Procédé selon la revendication 10, dans lequel le module de configuration reçoit l'identification et des informations de type de chaque station (101, 201, 301, 401) au moyen d'un protocole de découverte de service IP, dans lequel les informations de type sont telles que le module de configuration peut déduire le nombre d'entrées à partir de celles-ci, et dans lequel le protocole de distribution de service est l'un des suivants : une découverte de service par système de nom de domaine, DNS-SD, un protocole UPnP (Universal Plug and Play).

12. Procédé selon la revendication 10 ou 11, dans lequel le module de configuration comprend un serveur de protocole d'ouverture de session, SIP ; et le serveur SIP est configuré sur la base de la table d'intercommunication.
